# FASCICULE DE BREVET EUROPEEN

(11) **EP 0 363 261 B1**
(45) Date de publication et mention de la délivrance du brevet: **21.04.1993**
(21) Numéro de dépôt: 89402690.5
(22) Date de dépôt: 29.09.1989
(51) Int. Cl.: B60N 2/44, B60R 22/26

(54) **Armature renforcée pour siège de véhicule**
Verstärkte Armatur für Fahrzeugsitze
Reinforced frame for a vehicle seat

(30) Priorité: 03.10.1988 FR 8812904
(43) Date de publication de la demande: 11.04.1990
(73) Titulaire: CESA COMPAGNIE EUROPEENNE DE SIEGES POUR AUTOMOBILES, 92300 Levallois-Perret (FR)
(72) Inventeur: Colin, Pierre, F-25350 Mandeure (FR); Fourrey, François, F-25200 Montbeliard (FR)
(74) Mandataire: Mestre, Jean (FR)

(56) Documents cités:
- DE-A- 3 624 295
- FR-A- 2 078 927
- GB-A- 899 560

## Description

La présente invention concerne un siège de véhicule et plus particulièrement un siège capable de porter les ancrages d'une ceinture de sécurité et de supporter les efforts appliqués à ces ancrages.

Les ceintures classiques, et notamment les ceintures de sécurité utilisées dans les véhicules automobiles, sont ancrées en trois points : deux ancrages inférieurs et un ancrage supérieur. Les deux ancrages inférieurs sont situés sur le plancher du véhicule ou dans certains cas sur les glissières de réglage longitudinal du siège, de part et d'autre du coussin d'assise. L'ancrage supérieur est le plus souvent fixé sur le montant latéral de la carrosserie. Il est, toutefois, de plus en plus désiré de fixer cet ancrage supérieur au sommet du dossier du siège. Cette disposition a en effet l'avantage de permettre à la ceinture d'épouser plus complètement le corps du passager et limite ainsi les déplacements de ce corps en cas de chocs frontaux. En outre, en cas de chocs latéraux, la tête du passager ne risque plus de heurter le point d'ancrage situé sur le montant latéral.

Or, la présence d'un point d'ancrage supérieur au sommet du dossier du siège soumet ce dernier à des efforts importants. Il est donc nécessaire de renforcer la structure du siège afin de garantir sa tenue mécanique en cas d'effort sur la ceinture de sécurité sous l'effet d'un choc. La plupart des solutions existantes mettent en oeuvre une structure particulièrement massive pour répondre à ce besoin.

La présente invention a pour but de fournir une armature renforcée qui permette de réaliser une structure de siège capable de porter les trois dispositifs d'ancrage d'une ceinture de sécurité en n'ayant qu'un poids raisonnable, et en permettant la modification de l'inclinaison du dossier. Ce but est atteint grâce aux caractéristiques décrites dans la revendication 1.

Cette invention concerne en effet une armature de siège de véhicule, comportant un cadre d'assise fermé et un cadre de dossier de forme générale en U renversé qui sont reliés entre eux par un axe d'articulation, dans laquelle l'un des côtés verticaux du cadre de dossier est formé par trois tubes coudés qui sont réunis entre eux à leur deux extrémités et à la barre du U à leur extrémité supérieure et qui sont fixés entre ces extrémités à une ferrure triangulaire traversée par l'axe d'articulation de l'assise et du dossier.

Selon une autre caractéristique de l'invention, le cadre d'assise comporte de chaque côté un piètement ayant au moins un sommet d'appui sur le sol, le piètement proche de la ferrure ayant un sommet inférieur situé en arrière du dossier du siège par rapport à l'axe d'articulation de l'assise et du dossier.

Les cadres d'assise et de dossier pouvant également être constitués par des tubes, l'ensemble de la structure du siège ne présente qu'un poids raisonnable. Par contre la présence sur l'un des côtés ,des tubes de renforcement, assure au siège une rigidité suffisante pour lui permettre de résister efficacement aux efforts que pourrait exercer une ceinture de sécurité portée par un enrouleur fixé au sommet du dossier.

L'armature selon l'invention est tout particulièrement adaptée à la réalisation des sièges de véhicules automobiles mais peut bien entendu être utilisée pour d'autres sièges, de véhicules ou autres.

La description ci-dessous d'un mode de réalisation, donné à titre d'exemple non limitatif et représenté aux dessins annexés, fera d'ailleurs ressortir les avantages et caractéristiques de l'invention. Sur ces dessins :
La figure 1 est une vue en perspective d'une armature de siège selon l'invention.
La figure 2 est une vue de côté de l'armature de la Fig.1.
La figure 3 est une vue en perspective à plus grande échelle de la fixation de la boucle de verrouillage de la ceinture sur l'armature de siège de la figure 1.
La figure 4 est une vue analogue à la Fig.2 d'une variante de réalisation.

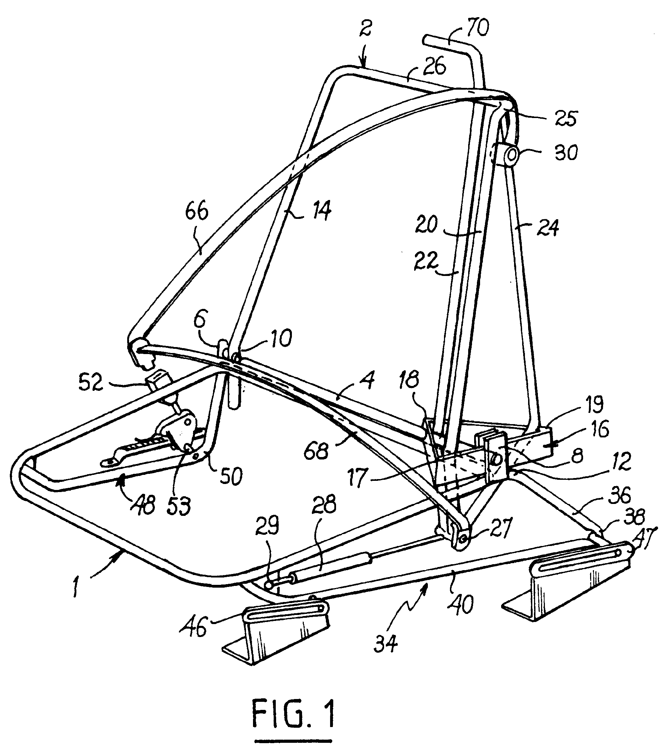

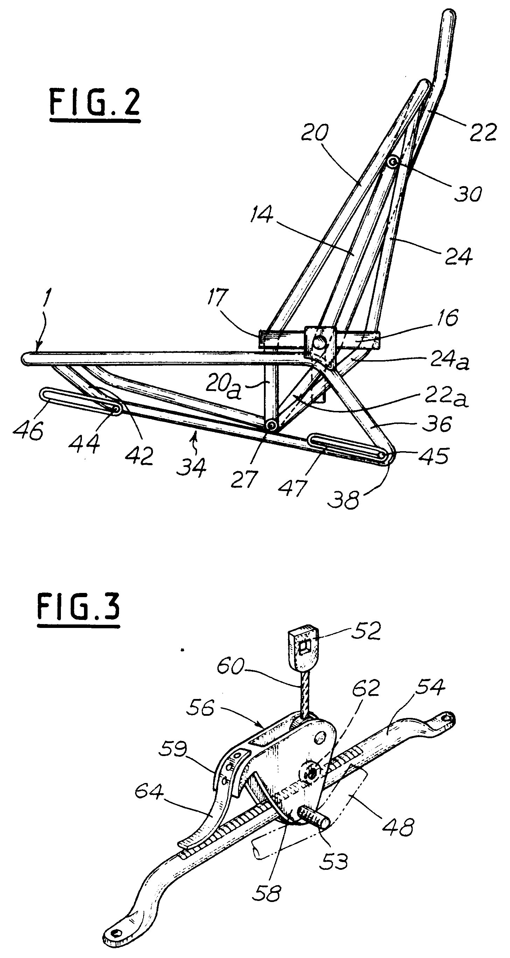

L'armature de siège représentée sur les Fig.1 et 2 comporte d'une manière classique un cadre d'assise 1, qui est fermé sur lui-même et est de préférence constitué par un tube unique, et un cadre de dossier 2, de forme générale en U renversé, qui est relié au cadre d'assise par un axe d'articulation 4 dont les extrémités sont portées par deux chapes, respectivement 6 et 8, fixées sur le cadre 1 au droit de ses angles arrière 10 et 12. L'axe d'articulation 4 traverse également d'un côté le montant latéral 14 de l'armature de dossier 2 et de l'autre une ferrure triangulaire 16 fixée sur la chape 8.

Dans chacun des angles 17, 18 et 19 de la ferrure 16 est fixé un tube, respectivement 20, 22 et 24, qui est dirigé vers le haut et incliné. Ces tubes sont réunis au voisinage de leur extrémité supérieure pour former un ensemble pyramidal. En fait le tube 20 fixé dans l'angle avant 17 de la ferrure 16 est le prolongement du montant 14 et de la barre supérieure 26 du cadre 2 et les deux tubes 22 et 24 sont fixés sur cette barre 26 au voisinage du coude 25 la reliant au tube 20.

Comme le montre la figure 1, l'angle 17 est situé nettement en avant de l'axe d'articulation 4 et l'angle 19 est nettement en arrière tandis que l'angle 18 est très proche de cet axe 4. Dans le mode de réalisation représenté sur les Fig.1 et 2, cet angle 18 est, en fait, juste derrière l'axe 4, et le tube 22 fixé dans cet angle passe derrière l'axe d'articulation du dossier et de l'assise. Son point de fixation sur la ferrure 16 se trouve cependant toujours en avant de la barre 26 lorsque le siège est en position d'utilisation.

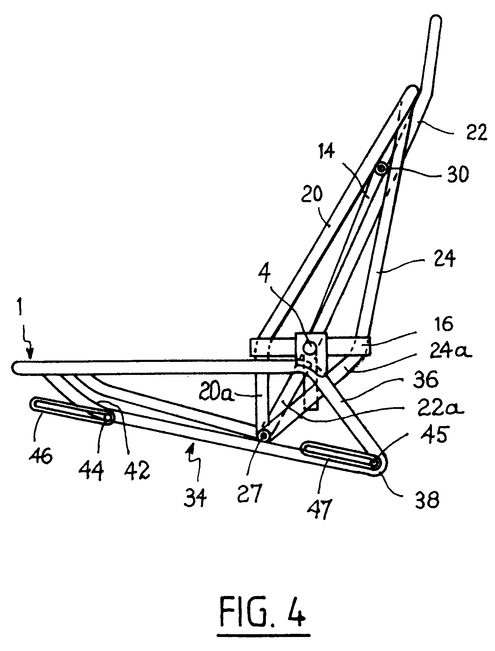

Selon une variante de réalisation représentée sur la Fig.4, le tube 22 fixé dans l'angle 18 passe directement au droit de l'axe 4 qui le traverse de la même manière que le montant 14. Son point de fixation sur la ferrure 16 est comme la chape 6 également en avant de la barre 26.

Les trois tubes 20, 22 et 24 sont coudés au droit de la ferrure 16 et se prolongent au-delà de celle-ci pour constituer une seconde pyramide en sens inverse de la première. Les prolongements 20a, 22a, et 24a sont ainsi réunis à leurs parties inférieures par une même ferrure 27 qui peut facilement supporter une ferrure d'ancrage de ceinture de sécurité.

La ferrure 27 peut également être reliée à un dispositif 28 de réglage de l'inclinaison du dossier qui en repoussant cette ferrure vers l'avant ou vers l'arrière fait basculer la ferrure 16 et l'ensemble des tubes 20, 22, 24 et 14 autour de l'axe 4. Ce dispositif peut être de tout type approprié, électrique ou mécanique, tel qu'un système vis-écrou, ou, comme représenté, un vérin agissant entre la ferrure 27 et un point 29 solidaire de la partie avant du tube d'assise.

De même, un enrouleur 30 de ceinture de sécurité peut être monté à la partie supérieure du dossier 2, pratiquement à la jonction des tubes 20, 22 et 24.

L'axe horizontal 4 traverse la ferrure 16 de manière telle que les tubes 20,22,24 ont la même liberté de pivotement sur lui que le montant opposé 14.

En dessous de la ferrure 16, le cadre 1 est solidaire d'un piètement 34 comportant un bras arrière 36 qui part de l'angle 12 et est incliné vers le bas et vers l'arrière de sorte qu'il forme, à son extrémité inférieure de jonction avec un bras 40 incliné vers l'avant et vers le haut, un coude 38 d'appui sur le sol, situé suffisamment en arrière par rapport au plan vertical passant par l'axe d'articulation 4 pour augmenter l'empattement de l'ensemble du siège et diminuer par la même les réactions d'appui du siège sur la structure du véhicule.

Le bras 40 relie le coude 38 au cadre d'assise 1 et forme au voisinage de ce dernier un coude 42 qui constitue un second point de fixation au plancher du véhicule. Ce coude peut également être muni de patins ou de galets 44 destinés à coopérer avec le profilé fixe d'une glissière 46 permettant le déplacement longitudinal du siège. Dans ce cas, des galets ou patins analogues 45 sont montés à la jonction 38 des bras 36 et 40 et coopèrent avec une glissière 47 munie par exemple de moyens de blocage des galets dans la position choisie.

Un second piètement 48 est monté de l'autre côté du cadre 1. Ce piètement est également constitué par un tube coudé. Il est fixé à une extrémité dans l'angle 10 du cadre 1 et, à son extrémité opposée, au voisinage de la partie avant de ce dernier. Le coude 50 de ce tube 48 forme un troisième point d'appui sur le sol qui est situé sensiblement au trois quart arrière de l'assise. L'ensemble du siège repose ainsi sur les trois sommets d'un triangle dont la base est délimitée par les coudes 42 et 38 situés l'un à l'avant et l'autre largement à l'arrière de l'assise du siège, et est ainsi sensiblement parallèle au longeron extérieur du véhicule et voisine de ce longeron, tandis que le sommet opposé à cette base, consitué par le coude 50, est situé dans la partie centrale du véhicule.

Bien entendu le coude 50 peut, comme les points 42 et 38, recevoir des galets ou patins coulissant dans un profilé de glissière. Il peut également porter l'attache de la boucle de verrouillage 52 d'une ceinture de sécurité 66, 68.

Lorsque le siège est réglable longitudinalement, la boucle de verrouillage 52 est, de préférence, montée sur le coude 50 par l'intermédiaire d'un dispositif de blocage qui limite les effets d'un effort important exercé sur la ceinture de sécurité en immobilisant le coude 50. Ce dispositif de blocage comporte par exemple (Fig.3) un axe 53 qui traverse le tube 48 et passe sous une glissière 54 crantée en forme de crémaillère et disposée sur le plancher du véhicule parallèlement aux glissières 46 et 47. L'axe 53 supporte un cliquet 56 de coopération avec la crémaillère en vue du blocage longitudinal du siège. Ce cliquet est formé par une pièce creuse ayant deux flancs 58, sensiblement triangulaires, qui viennent s'emboîter de part et d'autre de la crémaillère 54. L'axe 53 traverse l'un des angles de ces deux flancs tandis que les deux autres angles portent respectivement une dent de blocage 59 et l'attache 60 de la boucle de verrouillage 52 de ceinture de sécurité. Un galet 62 est en outre monté entre les flancs 58 de façon à rouler sur la glissière 54 lors d'un déplacement volontaire du piètement 48 tandis qu'une lame de ressort 64, fixée sur le cliquet 56 et en appui sur la glissière 54, tend constamment à repousser la dent de blocage 59 du cliquet loin de la glissière et ainsi à permettre ce déplacement. Par contre, lorsqu'un effort important est exercé sur la sangle 66 de la ceinture de sécurité 66, 68 fixée à la boucle 52 et à l'enrouleur 30, il provoque un pivotement du cliquet 56 en direction des crans de la crémaillère 54 contre l'action du ressort 64 et assure immédiatement un blocage sous un effet d'arc-boutement.

La ceinture de sécurité 66, 68 montée sur le siège comporte ainsi deux points d'ancrage inférieurs, constitués respectivement par la boucle de verrouillage 52 et la patte d'ancrage 27 qui sont solidaires de l'assise, et un point d'ancrage supérieur formé par l'enrouleur 30 monté à proximité de la partie supérieure du dossier. De préférence cette partie supérieure est légèrement rabattue vers l'extérieur de façon à comporter une barre 26 sensiblement horizontale sur la surface extérieure de laquelle la sangle 66 de la ceinture de sécurité peut glisser à sa sortie de l'enrouleur 30.

Le renforcement latéral constitué par les tubes 20, 22 et 24 et par le piètement 34 de l'assise assure à la structure du siège une résistance importante et notamment lui permet de résister aux efforts exercés par la sangle 66 lors d'un choc frontal ou latéral. En effet la pyramide constituée par la ferrure 16 et les trois tubes 20, 22 et 24 est orientée de telle manière que, lors d'un choc, l'effort oblique exercé par l'occupant sur la sangle baudrier 66 de la ceinture de sécurité, sous l'effet de la décélération, est sensiblement aligné avec le plan médian de la pyramide, passant par le tube arrière 24. Les tubes 20 et 22 travaillent donc en compression et le tube 24 en traction. Le dispositif de réglage 28, lorsqu'il y en a un, est soumis à un effort d'extension.

De préférence, la ferrure 16 a la forme d'un triangle isocèle de sorte que le plan médian passant par le tube 24 est confondu avec le plan de symétrie de la pyramide.

En outre, le renforcement du dossier constitue un bouclier qui contribue à améliorer la sécurité des passagers en cas de chocs latéraux. Ce bouclier, comme le renforcement, est maintenu identique quelle que soit la position du siège.

L'armature renforcée ainsi réalisée est constituée par des tubes, ce qui la rend particulièrement légère et permet d'obtenir une structure de siège renforcée de manière importante et offrant une grande sécurité en ayant cependant un poids raisonnable et un faible coût. Une telle structure peut en outre facilement s'adapter à des types de véhicules très divers que ce soient des véhicules automobiles ou autres.

Par ailleurs, comme le montre la figure 1, le tube 22 fixé dans l'angle 18 peut facilement être prolongé vers le haut au-delà de la barre 26 et recourbé pour former un support d'appui-tête 70.

## Revendications

1. Armature de siège de véhicule comportant un cadre d'assise (1) et un cadre de dossier (2) reliés entre eux par un axe d'articulation (4), caractérisée en ce que l'un des côtés verticaux du cadre de dossier (2) est formé par trois tubes (20,22,24) réunis à leur sommet entre eux et à la barre supérieure (26) du cadre de dossier, fixés à une ferrure triangulaire (16) traversée par l'axe d'articulation (4), coudés et prolongés en-dessous de la ferrure pour être réunis à leur extrémité inférieure (27).

2. Armature suivant la revendication 1, caractérisée en ce que l'un (20) des tubes latéraux du dossier est d'une seule pièce avec un montant latéral opposé (14) et une barre supérieure (26).

3. Armature suivant l'une des revendications 1 et 2, caractérisée en ce que le cadre d'assise (1) est fermé et comporte de chaque côté un piètement (34,48) ayant au moins un sommet d'appui sur le sol, le piètement (34) proche de la ferrure (16) ayant un sommet inférieur (38) situé en arrière du dossier du siège par rapport à l'axe d'articulation (4).

4. Armature suivant l'une des revendications 1 à 3, caractérisée en ce que l'axe d'articulation (4) est porté par deux chapes (6,8) solidaires du cadre d'assise et traverse la ferrure triangulaire (16) et le montant latéral opposé (14) du dossier.

5. Armature suivant la revendication 4, caractérisée en ce que l'axe d'articulation (4) traverse également l'un (22) des tubes inclinés fixés à la ferrure (16).

6. Armature suivant l'une des revendications précédentes, caractérisée en ce que le point inférieur (27) de réunion des trois tubes coudés (20,22,24) porte une ferrure d'ancrage de ceinture de sécurité tandis qu'un enrouleur (30) est monté au voisinage du point supérieur de jonction de ces tubes (20,22,24).

7. Armature suivant l'une des revendications précédentes, caractérisée en ce que la ferrure (16) est montée pivotante sur l'axe d'articulation (4).

8. Armature suivant l'une des revendications 3 à 7, caractérisée en ce que le piètement (48) situé du côté opposé à la ferrure (16) porte au droit de son point d'appui (coude 50) sur le sol un élément d'ancrage (52) de ceinture de sécurité.

9. Armature suivant la revendication 8, caractérisée en ce que l'élément d'ancrage (52) est formé par une boucle de verrouillage reliée par l'intermédiaire d'une attache (60) au piètement (48).

10. Armature suivant l'une des revendications précédentes, caractérisée en ce que les points de fixation de deux des tubes (20, et 24) sur la ferrure (16) sont situés nettement l'un en avant et l'autre en arrière de l'axe d'articulation (4) tandis que le point de fixation du troisième tube (22) sur cette même ferrure est très proche de ce même axe.

11. Armature suivant l'une des revendications précédentes, caractérisée en ce que les points (17,18) de fixation de deux des tubes (20,22) sur la ferrure (16) sont situés en avant par rapport à la barre supérieure (26) du cadre de dossier, en position d'utilisation du siège.

12. Armature suivant l'une des revendications précédentes, caractérisée en ce que l'un (22) des tubes qui est fixé sur la ferrure (16) est prolongé au-delà de la barre supérieure (26) de l'armature et recourbé pour former un support d'appui-tête (70).

## Patentansprüche

1. Armatur für Fahrzeugsitze, mit einem Sitzrahmen (1) und einem Rückenlehnenrahmen (2), die durch eine Gelenkachse (4) miteinander verbunden sind, dadurch **gekennzeichnet,** daß eine der vertikalen Seiten des Rückenlehnenrahmens (2) durch drei Rohre (20,22,24) gebildet wird, die an ihrem oberen Ende miteinander und mit dem oberen Querstück (26) des Rückenlehnenrahmens vereinigt, an einem von der Gelenkachse (4) durchsetzten dreieckigen Beschlag (16) befestigt, gebogen und nach unten über den Beschlag hinaus verlängert und an ihrem unteren Ende (27) miteinander vereinigt sind.

2. Armatur nach Anspruch 1, dadurch **gekennzeichnet,** daß eines (20) der seitlichen Rohre der Rückenlehne in einem Stück mit einer gegenüberliegenden seitlichen Stütze (14) und einem oberen Querstück (26) ausgebildet ist.

3. Armatur nach Anspruch 1 oder 2, dadurch **gekennzeichnet,** daß der Sitzrahmen (1) geschlossen ist und auf jeder Seite ein Fußgestell (34,48) aufweist, das wenigstens einen Scheitel zur Abstützung auf dem Boden aufweist, wobei das in der Nähe des Beschlages (16) gelegene Fußgestell (34) einen unteren Scheitel (48) aufweist, der sich in bezug auf die Gelenkachse (4) hinter der Rückenlehne des Sitzes befindet.

4. Armatur nach einem der Ansprüche 1 bis 3, dadurch **gekennzeichnet,** daß die Gelenkachse (4) durch zwei an dem Sitzrahmen sitzende Gabeln (6,8) gehalten ist und durch den dreieckigen Beschlag (16) und die gegenüberliegende seitliche Stütze (14) der Rückenlehne hindurchverläuft.

5. Armatur nach Anspruch 4, dadurch **gekennzeichnet,** daß die Gelenkachse (4) auch eines (22) der geneigten Rohre durchläuft, die an dem Beschlag (16) befestigt sind.

6. Armatur nach einem der vorstehenden Ansprüche, dadurch **gekennzeichnet,** daß der untere Vereinigungspunkt (27) der drei gekrümmten Rohre (20,22,24) einen Verankerungsbeschlag für den Sicherheitsgurt trägt, während ein Aufroller (30) in der Nähe des oberen Vereinigungspunktes dieser Rohre (20,22,24) montiert ist.

7. Armatur nach einem der vorstehenden Ansprüche, dadurch **gekennzeichnet,** daß der Beschlag (16) schwenkbar auf der Gelenkachse (4) montiert ist.

8. Armatur nach einem der Ansprüche 3 bis 7, dadurch **gekennzeichnet,** daß das Fußgestell (48), das sich auf der dem Beschlag (16) entgegengesetzten Seite befindet, in Höhe seines Abstützungpunktes auf dem Boden (Bogen 50) ein Verankerungselement (52) für den Sicherheitsgurt trägt.

9. Armatur nach Anspruch 8, dadurch **gekennzeichnet,** daß das Verankerungselement (52) durch eine Verriegelungsöse gebildet wird, die über eine Peitsche (60) mit dem Fußgestell (48) verbunden ist.

10. Armatur nach einem der vorstehenden Ansprüche, dadurch **gekennzeichnet,** daß die Befestigungspunkte von zweien (20 und 24) der Rohre an dem Beschlag (16) für das eine Rohr deutlich vor und für das andere Rohr deutlich hinter der Gelenkachse (4) liegen, während der Befestigungspunkt des dritten Rohres (22) an dem selben Beschlag sehr nahe an dieser Achse liegt.

11. Armatur nach einem der vorstehenden Ansprüche, dadurch **gekennzeichnet,** daß die Befestigungspunkte der beiden Rohre (17, 18) an dem Beschlag (16) in der Gebrauchsstellung des Sitzes vor dem oberen Querstück (26) des Rückenlehnenrahmens liegen.

12. Armatur nach einem der vorstehenden Ansprüche, dadurch **gekennzeichnet,** daß eines (22) der Rohre, die an dem Beschlag (16) befestigt sind, über das obere Querstück (26) hinaus verlängert und umgebogen ist, um eine Kopfstütze (70) zu bilden.

## Claims

1. Framework for a vehicle seat and comprising a seat frame (1) and a back rest frame (2) connected inter se by an articulation spindle (4), characterised in that one of the vertical sides of the back rest frame (2) is formed by three tubes (20, 22, 24) connected inter se at the top and to the top bar (26) of the back rest frame, fixed to a triangular mounting member (16) traversed by the articulation spindle (4), angled over and extended to below the mounting member to be connected at their bottom end (27).

2. A framework according to Claim 1, characterised in that one (20) of the lateral tubes of the back rest is in one piece with an oppositely positioned lateral upright member (14) and a top bar (26).

3. A framework according to one of Claims 1 and 2, characterised in that the seat frame (1) is closed and comprises on each side an underframe (34, 48) having at least one vertex which bears on the ground, the underframe (34) close to the mounting member (16) having a bottom vertex (38) situated at the rear of the back rest of the seat in relation to the articulation spindle (4).

4. A framework according to one of Claims 1 to 3, characterised in that the articulation spindle (4) is carried by two side members (6, 8) rigid with the seat frame and traverses the triangular mounting member (16) and the opposite lateral upright member (14) of the back rest.

5. A framework according to Claim 4, characterised in that the articulation spindle (4) likewise traverses one (22) of the inclined tubes fixed to the mounting member (16).

6. A framework according to one of the preceding Claims, characterised in that the bottom point (27) of connection of the three angled-over tubes (20, 22, 24) carries a mounting member for anchoring a safety belt while a winding device (30) is mounted close to the top point at which these tubes are joined (20, 22, 24).

7. A framework according to one of the preceding Claims, characterised in that the mounting member (16) is pivotally mounted on the articulation spindle (4).

8. A framework according to one of Claims 3 to 7, characterised in that the underframe (48) situated on the side opposite the mounting member (16) carries at right-angles to its angled portion (50) which bears on the floor an element (52) for anchoring safety belt.

9. A framework according to Claim 8, characterised in that the anchoring element (52) is formed by a locking buckle connected to the underframe (48) by a tie member (60).

10. A framework according to one of the preceding Claims, characterised in that the fixing points of two of the tubes (20 and 24) on the mounting member (16) are situated clearly one in front and the other behind the articulation spindle (4) while the fixing point of the third tube (22) on this same mounting member is very close to this same spindle.

11. A framework according to one of the preceding Claims, characterised in that the fixing points (17, 18) of two of the tubes (20, 22) on the mounting member (16) are situated in front in relation to the top bar (26) of the back rest frame when the seat is in its position of use.

12. A framework according to one of the preceding Claims, characterised in that one (22) of the tubes which is fixed on the mounting member (16) is extended beyond the top bar (26) of the framework and is curved to form a support for a headrest (70).
